# EUROPÄISCHE PATENTANMELDUNG

(11) **EP 0 674 142 A1**
(43) Veröffentlichungstag der Anmeldung: **27.09.1995**
(21) Anmeldenummer: 95103776.1
(22) Anmeldetag: 15.03.1995
(51) Int. Cl.: F25B 17/08

(54) **Verfahren zum Betrieb einer Adsorptionskälteanlage**

(30) Priorität: 26.03.1994 DE 4410545
(71) Anmelder: Linde Aktiengesellschaft, D-65189 Wiesbaden (DE)
(72) Erfinder: Förg, Wolfgang, Dipl. Phys., D-82057 Icking (DE)
(74) Vertreter: Kasseckert, Rainer

(57) **Zusammenfassung**

Es wird ein Verfahren zum Betrieb einer Adsorptionskälteanlage vorgeschlagen, bei dem mindestens drei Adsorber (A1,A2,A3) parallel in der Weise betrieben werden, daß verschiedene Betriebsphasen zyklisch durchlaufen werden. Dabei befinden sich gleichzeitig immer mindestens ein Adsorber (A1,A2,A3) in einer Adsorptionsphase, mindestens ein Adsorber (A1,A2,A3) in einer Regenerationsphase und mindestens ein Adsorber (A1,A2,A3) in einer Kühlphase. Jeweils der in der Regenerationsphase befindliche Adsorber und der in der Kühlphase befindliche Adsorber werden über einen Wärmeträgerkreislauf in Wärmeaustausch gebracht. Dabei wird der in der Regenerationsphase befindliche Adsorber aufgeheizt, während der in der Kühlphase befindliche Adsorber abgekühlt wird.

## Beschreibung

Die Erfindung betrifft ein Verfahren zum Betreiben einer Adsorptionskälteanlage mit einem Adsorber, der nacheinander in verschiedenen Betriebsphasen betrieben wird, wobei in einer Adsorptionsphase ein Sorbat unter Wärmeabgabe adsorbiert wird, in einer Regenerationsphase adsorbiertes Sorbat durch Wärmezufuhr wieder desorbiert wird und in einer Kühlphase der Adsorber abgekühlt wird, woraufhin wieder mit der Adsorptionsphase begonnen wird.

Ein solches Verfahren ist z.B. in "DIE KALTE und KLIMATECHNIK, 9/1990, Seite 492 bis 500" beschrieben. Bei diesem bekannten Verfahren wird ein Sorbat, im vorliegenden Fall Wasser, in einem Verdampfer zum Verdampfen gebracht. Das verdampfte Sorbat wird einem Adsorber zugeführt, in dem das Sorbat in einer Adsorptionsphase unter Wärmeabgabe von einem Adsorptionsmittel, im vorliegenden Fall einem Zeolith, adsorbiert wird. Die während der Adsorption abgegebene Wärme wird aus dem Adsorber abgeführt und kann für verschiedene Zwecke genutzt werden. Sobald das Adsorptionsmittel mit dem Sorbat bis zu seiner maximalen Aufnahmekapazität beladen ist, wird eine Regenerationsphase eingeschaltet. Hierbei wird das adsorbierte Sorbat durch Wärmezufuhr wieder aus dem Adsorptionsmittel ausgetrieben. Diesen Vorgang bezeichnet man als Desorption. Das desorbierte Sorbat wird anschließend kondensiert und zum Verdampfer zurückgeführt. Der Adsorber wird in einer anschließenden Kühlphase abgekühlt, sodaß er erneut mit dem verdampften Sorbat beschickt werden kann. Es wird wieder mit der Adsorptionsphase begonnen.

Insgesamt fallen bei einer Adsorptionskälteanlage 3 nutzbare Temperaturniveaus an: Wärme am Kondensator in der Regenerationsphase, Wärme im Adsorber in der Adsorptionsphase und Kälte am Verdichter in der Adsorptionsphase. Die entsprechenden Wärmemengen können aber nur diskontinuierlich während der entsprechenden Betriebsphasen genutzt werden. Die bekannten Verfahren zum Betrieb einer Adsorptionskälteanlage weisen nämlich den Nachteil auf, daß die Adsorptionskälteanlage nur diskontinuierlich mit dem Sorbat beschickt werden kann, da eine Aufnahme des Sorbats nur während der Adsorptionsphase des Adsorbers möglich ist. Deshalb kann auch nur diskontinuierlich Kälte oder Wärme von der Adsorptionskälteanlage abgenommen werden, sodaß diese Adsorptionskälteanlagen für viele Anwendungsfälle ungeeignet sind. Da derartige Adsorptionskälteanlagen nur in einer Betriebsphase die gewünschten Nutzenergien liefern, sind sie außerdem wirtschaftlich unbefriedigend.

Der vorliegenden Erfindung liegt die Aufgabe zugrunde, ein Verfahren der eingangs genannten Art so auszugestalten, daß ein wirtschaftlicher Betrieb der Adsorptionskälteanlage erreicht wird.

Diese Aufgabe wird erfindungsgemäß dadurch gelöst, daß mindestens 3 Adsorber parallel in der Weise betrieben werden, daß die einzelnen Betriebsphasen zyklisch durchlaufen werden, wobei sich gleichzeitig immer mindestens 1 Adsorber in der Adsorptionsphase, mindestens 1 Adsorber in der Regenerationsphase und mindestens 1 Adsorber in der Kühlphase befinden, und daß jeweils der in der Regenerationsphase befindliche Adsorber und der in der Kühlphase befindliche Adsorber über einen Wärmeträgerkreislauf in Wärmeaustausch gebracht werden, wobei der in der Regenerationsphase befindliche Adsorber aufgeheizt und der in der Kühlphase befindliche Adsorber abgekühlt werden.

Da für die einzelnen Betriebsphasen in zyklisch umschaltbarer Weise jeweils ein bestimmter Adsorber zur Verfügung steht, ermöglicht das erfindungsgemäße Verfahren einen kontinuierlichen Betrieb der Adsorptionskälteanlage. Die Adsorber werden zyklisch in der Weise durchlaufen, daß jeweils 1 Adsorber während eines Betriebszyklus ausschließlich für die Kühlphase, Adsorptionsphase und Regenerationsphase zuständig ist. Da sich während der gesamten Betriebsdauer jeweils ein Adsorber in der Adsorptionsphase befindet, kann das Sorbat kontinuierlich adsorbiert werden. Die gewünschte Nutzenergie kann während jeder Betriebsphase von der Adsorptionskälteanlage abgeführt werden. Von Bedeutung ist auch, daß für die Kühlphase ein eigener Betriebszyklus vorgesehen ist. Dadurch wird erreicht, daß der Adsorber vor Beginn der Adsorptionsphase ausreichend vorgekühlt wird, um eine effektive Adsorption des Sorbats zu gewahrleisten. Insgesamt wird mit dem erfindungsgemäßen Verfahren eine wesentliche Verbesserung der Wirtschaftlichkeit der Adsorptionskälteanlage gegenüber dem Stand der Technik erreicht.

Die einzelnen Betriebsphasen werden zweckmäßigerweise folgendermaßen gesteuert: Bei einem Druckanstieg in dem in der Adsorptionsphase befindlichen Adsorber auf einen vorgewählten Wert wird dieser Adsorber auf die Regenerationsphase, der in der Kühlphase befindliche Adsorber auf die Adsorptionsphase und der in der Regenerationsphase befindliche Adsorber auf die Kühlphase umgeschaltet.

Falls die Wärmeübertragung zwischen dem in der Regenerationsphase befindlichen Adsorber und dem in der Kühlphase befindlichen Adsorber nicht ausreicht, um den in der Regenerationsphase befindlichen Adsorber für eine möglichst vollständige Desorption genügend aufzuheizen, wird gemäß einer Weiterbildung des Erfindungsgedankens Heißdampf in den in der Regenerationsphase befindlichen Adsorber eingeleitet.

Vorteilhafterweise wird der in der Adsorptionsphase befindliche Adsorber mittels eines Wärmeträgerkreislaufs gekühlt, um die Adsorption zu unterstützen. Hierzu wird der in der Adsorptionsphase befindliche Adsorber bevorzugt mittels desselben Wärmeträgerkreislaufs gekühlt, mittels dessen der in der Regenerationsphase befindliche Adsorber aufgeheizt wird. Dabei wird der Wärmeträgerkreislauf zweckmäßigerweise nacheinander über den in der Kühlphase befindlichen Adsorber, den in der Regenerationsphase befindlichen Adsorber und einen Wasserkühler geführt.

Grundsätzlich wird der Wärmeträgerkreislauf zum Aufheizen oder Abkühlen der einzelnen Adsorber vorzugsweise über in den Adsorbern vorgesehene Wärmeaustauscherschlangen geführt. Die Wärmeaustauscherschlangen sind zweckmäßigerweise so in den Adsorbern eingebaut, daß ein guter Wärmeaustausch zwischen ihnen und dem in den Adsorbern befindlichen Adsorptionsmittel gewährleistet ist. Bevorzugt sind die Adsorber in Form eines Isothermreaktors ausgebildet, wie er beispielsweise in der DE-A1-38 25 724 beschrieben ist.

Als Sorbat werden vorzugsweise C₃- oder C₄-Kohlenwasserstoffe verwendet. Auch SO₂ oder NH₃ kann mit Vorteil eingesetzt werden. Als Adsorptionsmittel wird Aktivkohle bevorzugt. Mit Vorteil können auch aktiviertes Aluminium, ein Silicagel oder ein Zeolith verwendet werden. Auch Mischungen aus mindestens zwei dieser Adsorptionsmittel können eingesetzt werden.

Das erfindungsgemäße Verfahren eignet sich gleichermaßen zum Betrieb von Adsorptionskälteanlagen, die zum Kühlen oder Erwärmen von Räumen oder sonstigen Objekten eingesetzt werden. Adsorptionskälteanlagen, die zum Erwärmen von Räumen oder Objekten verwendet werden, werden oftmals auch als Adsorptionswärmepumpen bezeichnet. Die Erfindung bezieht sich ausdrücklich auch auf den Betrieb derartiger Anlagen.

Im folgenden soll die Erfindung anhand von in den Figuren schematisch dargestellten Ausführungsbeispielen näher erläutert werden.

Es zeigen:
- Figur 1: ein Fließbild einer Adsorptionskälteanlage
- Figur 2: ein Isosterendiagramm
Es werden 2 Ausführungsbeispiele beschrieben. In einem Fall wird Propan bei einem Druck von 1,5 bar und einer Temperatur von -33°C verdampft. Im anderen Fall wird Propan bei einem Druck von 5,0 bar und einer Temperatur von 0°C verdampft.

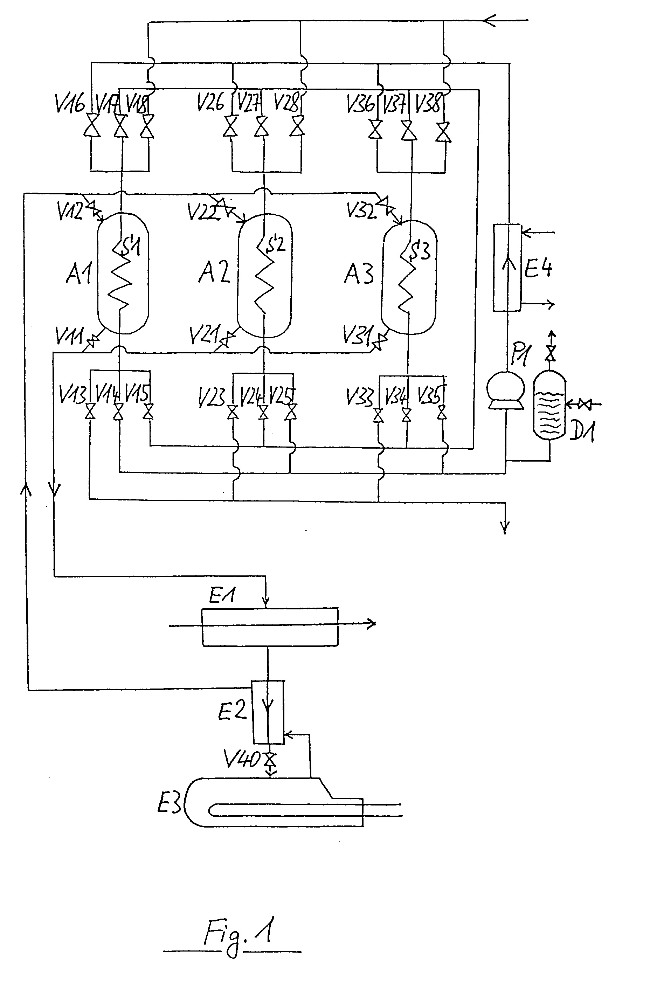

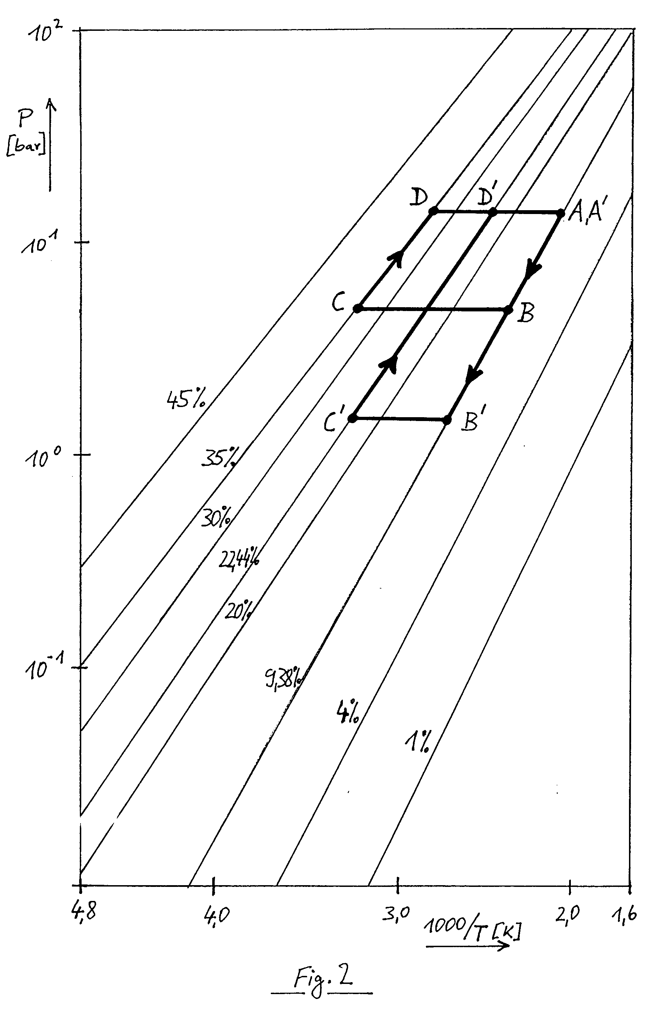

Die beiden Fälle werden anhand des Fließbildes gemäß Figur 1 und des zugehörigen Isosterendiagramms gemäß Figur 2 gemeinsam erläutert.

Zunächst soll der prinzipielle Aufbau der Adsorptionskälteanlage anhand von Figur 1 kurz beschrieben werden:
Das Propan wird in einem Verdampfer E3 bei 1,5 bar und -33°C bzw. 5 bar und 0°C verdampft. Das verdampfte Propan gelangt anschließend in einen Unterkühlungsgegenströmer E2 und verläßt diesen mit einer Temperatur von 35°C. Über Ventile V12, V22 und V32 kann das Propan den einzelnen Adsorbern A1, A2 oder A3 aufgegeben werden. Die Adsorber A1, A2 und A3 sind mit einer Aktivkohleschüttung gefüllt.

In den Adsorbern A1, A2 und A3 sind Wärmeaustauscherschlangen S1, S2 und S3 in der Aktivkohleschüttung eingebettet, um die Aktivkohleschüttung entsprechend zu kühlen oder aufzuheizen. Über Ventile V16, V17, V26, V27, V36, V37, V14, V15, V24, V25, V34 und V35 stehen die Wärmeaustauscherschlangen S1, S2 und S3 mit einem Wärmeträgerkreislauf in Verbindung. Als Wärmeträger wird Wasserkondensat eingesetzt. Der Wasserkondensatkreislauf wird von einem Vorratsbehälter D1 gespeist. Das Wasserkondensat wird mittels einer Pumpe P1 im Kreis geführt. In den Wasserkondensatkreislauf ist ein Wasserkühler E4 eingeschaltet. In den Wasserkühler E4 wird Wasser mit einer Temperatur von 25°C eingeleitet, das mit einer Temperatur von 35°C wieder aus dem Wasserkühler E4 abgezogen wird. Dabei wird das Wasserkondensat im Wasserkondensatkreislauf auf 30°C abgekühlt. Über Ventile V18, V28 und V38 kann gesättigter Heißdampf mit einer Temperatur von 240°C in die einzelnen Adsorber A1, A2 und A3 eingeleitet werden. Über Ventile V13, V23 und V33 kann überschüssiges Wasserkondensat aus dem Wasserkondensatkreislauf ausgeschleust werden.

Nach der Desorption des Propans in den einzelnen Adsorbern A1, A2 oder A3 kann das desorbierte Propan bei einem Druck von 14 bar über Ventile V11, V21 und V31 aus den Adsorbern A1, A2 oder A3 abgezogen werden. Das desorbierte Propan wird anschließend einem Kondensator E1 zugeführt, der mit Kühlwasser gekühlt wird. Das Kühlwasser erwärmt sich dabei von 25°C auf 35°C. Das desorbierte Propan weist beim Verlassen des Kondensators E1 eine Temperatur von 40°C auf. Es wird über den Unterkühlungsgegenströmer E2 geleitet und schließlich über Ventil V40 wieder zum Verdampfer E3 zurückgeführt.

Anhand der Figuren 1 und 2 wird nun der Verfahrensablauf beim Betrieb der Adsorptionskälteanlage näher erläutert:
Dabei ist in Figur 2 das zugehörige Isosterendiagramm für die beiden betrachteten Fälle dargestellt. Der mit den Eckpunkten ABCD bezeichnete Adsorptionskreisprozess bezieht sich auf den Fall, bei dem Propan bei einem Druck von 5 bar und 0°C verdampft wird. Der mit A'B'C'D' bezeichnete Adsorptionskreisprozess betrifft den Fall, bei dem Propan bei einem Druck von 1,5 bar und -33°C verdampft wird. Die Isosteren sind für verschiedene Beladungen der Aktivkohle eingetragen. Auf der Geraden CD beträgt die Beladung 35 %, auf der Geraden C'D' 22,44 % und auf der Geraden B'A' bzw. BA 9,38 %.

Betrachtet sei der Prozeß in Figur 2 anhand des Fließbildes gemäß Figur 1. Das verdampfte Propan wird im Unterkühlungsgegenströmer E2 auf 35°C angewärmt und strömt zum Adsorber A1, welcher sich in der Adsorptionsphase befindet. Dies bedeutet, daß Ventil V12 offen ist, während Ventil V11 geschlossen ist. Der Adsorber A1 wird mittels der in der Aktivkohleschüttung liegenden Wärmeaustauscherschlange S1 durch einen Wasserkondensatkreislauf gekühlt, dabei wird der Wasserkondensatkreislauf mittels der Pumpe P1 durch den Wasserkühler E4 gepumpt und auf ca. 30°C gekühlt. Durch das Ventil V16 strömt das Wasserkondensat in die Wärmeaustauscherschlange S1 ein. Durch das Ventil V14 gelangt es zurück zur Pumpe P1. Sobald die Adsorptionskapazität des Adsorbers A1 erschöpft ist (.C bzw. C' in Figur 2) steigt der Druck über den Anfangswert von 5,0 bar bzw. 1,5 bar leicht an.

Das ist der Zeitpunkt, um auf den regenerierten und vorgekühlten Adsorber A2 umzuschalten. Das Ventil V22 wird geöffnet, während die Ventile V21 und V12 geschlossen werden.

Der Adsorber A1 muß nun aufgeheizt werden, während der heiße und regenerierte Adsorber A3 gekühlt werden muß. Hierzu wird das aus dem Adsorber A3 über Ventil V34 ausströmende heiße Kondensat über das Ventil V17 in den Adsorber A1 eingeleitet. Dabei kühlt sich das Wasserkondensat ab. Das Wasserkondensat wird über Ventil V14 zur Pumpe P1 geleitet. Zum Zeitpunkt, in dem V17 geöffnet wird, wird V16 geschlossen.

Sobald das aus dem Adsorber A3 ausströmende Kondensat kälter wird, werden die Ventile V34 und V17 geschlossen. Der Adsorber A1 wird durch Öffnen des Ventils V18 mittels Heißdampf weiter aufgeheizt. Während des Heizvorgangs steigt der Druck im Außenraum des Adsorbers A1 an. Man bewegt sich auf der Geraden CD bzw. C'D' in Figur 2. Sobald der Druck 14 bar erreicht hat, öffnet Ventil V11 und das desorbierende Propan strömt zu dem Kondensator E1, wo es gegen Kühlwasser verflüssigt wird. Danach wird das verflüssigte Propan im Unterkühlungsgegenströmer E2 unterkühlt und über Ventil V40 in den Verdampfer E3 entspannt. Man bewegt sich nun auf der Geraden DA bzw. D'A' in Figur 2.

Sobald der Adsorber A1 seine Gleichgewichtsbeladung von 9,38 Gew.% bei 230°C und 14 bar erreicht hat (Tendenz sinkender Druck), wird der Heißdampf durch Schließen des Ventils V18 weggenommen.

Durch Öffnen des Ventils V16 wird nun auf die Kühlphase umgeschaltet. Das Ventil V11 wird geschlossen. Nun sinkt der Druck im Adsorber A1 wieder auf den Anfangsdruck von 5,0 bar bzw. 1,5 bar. Man bewegt sich dabei in Figur 2 auf der Geraden AB bzw. A'B'. Dann wird das Ventil V12 geöffnet.

Durch weiteres Kühlen des Adsorbers A1 bei geöffnetem Ventil V16 wird die Beladung der Aktivkohle von 9,38 % auf 22,4 % im ersten Fallbeispiel und auf 35,0 % im zweiten Fallbeispiel gesteigert. Dann beginnt der Kreislauf von neuem.

Nachdem die Adsorption im Adsorber A1 beendet und der Adsorber A2 auf Adsorption geschaltet ist, werden der Adsorber A1 aufgeheizt und der Adsorber A3 gekühlt. Dies geschieht folgendermaßen:
Die Ventile V36 und V34 werden geöffnet. Das über das Ventil V34 austretende heiße Wasserkondensat wird über das Ventil V17 in den Adsorber A1 eingeleitet. Beim Durchströmen des Adsorbers A1 kühlt sich das Wasserkondensat ab und wird über das Ventil V14 zur Pumpe P1 geleitet. Die Pumpe P1 pumpt das Wasserkondensat gleichzeitig in Serie über die Ventile V26 und V25 durch den Adsorber A2, der sich in der Adsorptionsphase befindet, und über die Ventile V36, V34, V17 und V14 durch die Adsorber A3 und A1, solange Wärme vom Adsorber A3 zum Adsorber A1 getragen werden kann. Sobald die Temperatur am Ventil V34 fallende Tendenz zeigt, werden die Ventile V34 und V17 geschlossen, während die Ventile V18 und V35 geöffnet werden. Die Adsorber A2 und A3 werden nun parallel gekühlt. Der Adsorber A2 befindet sich in der Adsorptionsphase. Im Adsorber A3 sinkt der Druck bis zum Adsorptionsdruck von 5,0 bar bzw. 1,5 bar ab. Man bewegt sich in der Figur 2 auf der Geraden von A nach B bzw. von A' nach B'.

Die einzelnen Adsorber A1, A2 und A3 werden zyklisch betrieben, so daß die Adsorber A1, A2 und A3 zeitlich versetzt diesselben Verfahrensschritte durchlaufen.

## Patentansprüche

1. Verfahren zum Betreiben einer Adsorptionskälteanlage mit einem Adsorber, der nacheinander in verschiedenen Betriebsphasen betrieben wird, wobei in einer Adsorptionsphase ein Sorbat unter Wärmeabgabe adsorbiert wird, in einer Regenerationsphase adsorbiertes Sorbat durch Wärmezufuhr wieder desorbiert wird und in einer Kühlphase der Adsorber abgekühlt wird, woraufhin wieder mit der Adsorptionsphase begonnen wird, **dadurch gekennzeichnet, daß** mindestens 3 Adsorber parallel in der Weise betrieben werden, daß die einzelnen Betriebsphasen zyklisch durchlaufen werden, wobei sich gleichzeitig mindestens 1 Adsorber in der Adsorptionsphase, mindestens 1 Adsorber in der Regenerationsphase und mindestens 1 Adsorber in der Kühlphase befinden, und daß jeweils der in der Regenerationsphase befindliche Adsorber und der in der Kühlphase befindliche Adsorber über einen Wärmeträgerkreislauf in Wärmeaustausch gebracht werden, wobei der in der Regenerationsphase befindliche Adsorber aufgeheizt und der in der Kühlphase befindliche Adsorber abgekühlt werden.

2. Verfahren nach Anspruch 1, dadurch gekennzeichnet, daß bei einem Druckanstieg in dem in der Adsorptionsphase befindlichen Adsorber auf einen vorgewählten Wert dieser Adsorber auf die Regenerationsphase, der in der Kühlphase befindliche Adsorber auf die Adsorptionsphase und der in der Regenerationsphase befindliche Adsorber auf die Kühlphase umgeschaltet werden.

3. Verfahren nach Anspruch 1 oder 2, dadurch gekennzeichnet, daß in den in der Regenerationsphase befindlichen Adsorber Heißdampf eingeleitet wird.

4. Verfahren nach einem der Ansprüche 1 bis 3, dadurch gekennzeichnet, daß der in der Adsorptionsphase befindliche Adsorber mittels eines Wärmeträgerkreislaufs gekühlt wird.

5. Verfahren nach Anspruch 4, dadurch gekennzeichnet, daß der in der Adsorptionsphase befindliche Adsorber mittels desselben Wärmeträgerkreislaufs gekühlt wird, mittels dessen der in der Regenerationsphase befindliche Adsorber aufgeheizt wird.

6. Verfahren nach Anspruch 5, dadurch gekennzeichnet, daß der Wärmeträgerkreislauf nacheinander über den in der Kühlphase befindlichen Adsorber, den in der Regenerationsphase befindlichen Adsorber und einen Wasserkühler geführt wird.

7. Verfahren nach einem der Ansprüche 1 bis 6, dadurch gekennzeichnet, daß zum Aufheizen oder Abkühlen der Adsorber der Wärmeträgerkreislauf über in den Adsorbern vorgesehene Wärmeaustauscherschlangen geführt wird.

8. Verfahren nach einem der Ansprüche 1 bis 7, dadurch gekennzeichnet, daß als Sorbat ein C₃- oder C₄-Kohlenwasserstoff verwendet wird.

9. Verfahren nach einem der Ansprüche 1 bis 7, dadurch gekennzeichnet, daß als Sorbat SO₂ verwendet wird.

10. Verfahren nach einem der Ansprüche 1 bis 7, dadurch gekennzeichnet, daß als Sorbat NH₃ verwendet wird.

11. Verfahren nach einem der Ansprüche 1 bis 10, dadurch gekennzeichnet, daß als Adsorptionsmittel Aktivkohle verwendet wird.

12. Verfahren nach einem der Ansprüche 1 bis 10, dadurch gekennzeichnet, daß als Adsorptionsmittel ein aktiviertes Aluminium verwendet wird.

13. Verfahren nach einem der Ansprüche 1 bis 10, dadurch gekennzeichnet, daß als Adsorptionsmittel ein Silicagel verwendet wird.

14. Verfahren nach einem der Ansprüche 1 bis 10, dadurch gekennzeichnet, daß als Adsorptionsmittel ein Zeolith verwendet wird.

15. Verfahren nach einem der Ansprüche 1 bis 10, dadurch gekennzeichnet, daß als Adsorptionsmittel eine Mischung aus mindestens zwei der Adsorptionsmittel Aktivkohle, aktiviertes Aluminium, Silicagel und Zeolith verwendet wird.
